# Europäisches Patentamt
# European Patent Office
# Office européen des brevets

(19)

(11) Numéro de publication: **0 126 677**
**B1**

(12)

# FASCICULE DE BREVET EUROPEEN

(45) Date de publication du fascicule du brevet:
09.03.88

(51) Int. Cl.⁴: **B 27 L 5/02**

(21) Numéro de dépôt: **84400932.4**

(22) Date de dépôt: **09.05.84**

(54) **Machine à dérouler le bois perfectionnée.**

(30) Priorité: **09.05.83 FR 8307689**

(43) Date de publication de la demande:
**28.11.84 Bulletin 84/48**

(45) Mention de la délivrance du brevet:
**09.03.88 Bulletin 88/10**

(84) Etats contractants désignés:
**BE DE GB IT SE**

(56) Documents cités:
**CH - A - 330 577**
**DE - A - 2 542 959**
**DE - B - 2 601 433**
**DE - C - 56 287**
**FR - A - 2 147 438**
**GB - A - 558 430**
**SU - A - 821 149**
**SU - A - 952 594**
**US - A - 3 473 584**

(73) Titulaire: **CENTRE TECHNIQUE DU BOIS ET DE L'AMEUBLEMENT, 10 avenue Saint-Mandé, F-75012 Paris (FR)**

(72) Inventeur: **Fondronnier, Jacques, 8, rue Pierre Lescot, F-94000 Creteil (FR)**
Inventeur: **Guillerm, Jean, Ker Yan 64 bis Grande Rue, F-29139 Nevez (FR)**
Inventeur: **Comte, Michel, 3, rue Gounod, F-95120 Ermont (FR)**

(74) Mandataire: **Caunet, Jean et al, Cabinet BEAU DE LOMENIE 55, rue d'Amsterdam, F-75008 Paris (FR)**

ACTORUM AG

## Description

Les machines à dérouler le bois se présentent comme de gros tours horizontaux à chariot transversal, travaillant sur toute la longueur des billes de bois à dérouler.

L'avance du chariot est synchronisée avec la rotation des broches qui entraînent la bille dans leur mouvement.

Ainsi, pour chaque rotation exacte de 360°, le chariot avance d'une quantité toujours égale à l'épaisseur «e» du placage déroulé. C'est l'expression de la spirale d'Archimède à une infinité de centres.

Une dérouleuse moderne met en jeu des forces d'autant plus grandes que l'on traite des bois de plus faibles diamètres et que l'on tourne à des vitesses plus grandes pour accroître l'indispensable productivité.

Les réactions à l'effort de coupe et de compression donnent lieu à des déformations préjudiciables à la qualité des placages déroulés. Ces déformations du type «flambage» sont d'autant plus sensibles que les vitesses de rotation sont elles-mêmes plus grandes et que les diamètres des bois sont plus faibles.

Les études conduites par les différents spécialistes du déroulage des bois montrent que la réaction moyenne de la plus grande déformation se situe toujours du côté de la bille de bois opposé à celui où se trouve le couteau et suivant une direction ascendante faisant un angle de 30° environ par rapport au plan vertical passant par l'axe des broches si l'arête dudit couteau se trouve dans un plan horizontal.

Tous les constructeurs ont été amenés à proposer des dispositifs dits «antiflambage» dont l'incidence est directement opposée à la réaction déformante pour la contrebalancer.

La réalisation est le plus souvent du type accessoire et son acquisition généralement optionnelle.

Il apparaît aujourd'hui que le dispositif antiflambage doit équiper systématiquement toutes les dérouleuses et qu'il doit être traité comme un organe rigoureusement indispensable et essentiel de la machine.

La plupart des dispositifs antiflambage sont d'un fonctionnement imprécis parce qu'ils doivent en permanence s'opposer à des déplacements fugaces, selon des fréquences à la fois irrégulières et extrêmement rapides, assorties de directions et d'amplitudes constamment variables.

Ces déplacements résultent de l'hétérogénéité du matériau bois et des sollicitations brutales que cette hétérogénéité impose à l'ensemble des organes de la machine; ainsi, le chariot porte-outils subit de la part du bois une force plus grande lorsque le couteau pénètre dans des zones plus denses, plus dures, dans des contrefils ou dans des régions noueuses.

A cette très large variable se superpose le phénomène de compression relative du bois, entre le couteau et la barre de compression.

L'exercice de la compression est inséparable de la production des placages déroulés de bonne qualité. Cette exigence intervient largement sur la grande variation des forces qui sollicitent de nombreux organes de la machine donnant lieu fréquemment à des chocs souvent violents dont les manifestations se traduisent par des usures profondes et toujours irrégulières.

La compression est le fait du réglage du passage entre couteau et barre de compression dont la valeur est inférieure à l'épaisseur du placage déroulé.

Sachant que le taux de compression peut atteindre couramment des valeurs de l'ordre de 15 à 20% il est facile d'imaginer les conséquences consécutives aux duretés très localisées et extrêmement variables du même bois.

Les parties de bois tendre, plus facilement compressibles, passent sans effort excessif, tandis que les parties de contrefils, de fibres inclinées, les nœuds, moins compressibles, heurtent plus ou moins violemment le couteau et la barre de compression et provoquent des matages vers l'arrière des pièces mécaniques sur lesquelles sont établis les réglages de passage.

Les fantaisies de la nature disséminent tous ces accidents du bois très irrégulièrement dans toute la masse et bien évidemment sans ordre précis, au point que les chocs sont subis tantôt à droite, tantôt à gauche, à tous endroits de la longueur des outils, entraînant par réaction des heurts violents sur les broches de la machine, sur les vis-mères et leurs écrous de commande d'avance du chariot, sur les glissières de translation et sur les butées vers l'arrière qui permettent d'établir la cote de passage moyenne requise.

Les inévitables opérations de «mise au rond» des billes avant que le déroulage continu puisse être entrepris sont en outre particulièrement préjudiciables au maintien correct des réglages établis.

Les mises au rond donnent lieu à une suite de chocs très localisés dont les incidences sont multipliées par les fortes épaisseurs déroulées à ces occasions.

C'est d'ailleurs le moment des «mises au rond» qui est mis à profit pour observer l'importance des jeux mécaniques et juger du niveau de délabrement des machines à dérouler le bois.

La présente invention a pour but de remédier à ces inconvénients en proposant une nouvelle conception de l'organisation et de la structure de la machine, grâce à laquelle la gravité permet:

– un rattrapage automatique et permanent des jeux de fonctionnement,

– une justesse rigoureuse de la trajectoire spirale suivie par l'arête du couteau dans la bille de bois, en raison d'un appui positif du chariot porte-outils poussé par une force en partie due à la pesanteur et supérieure au maximum des réactions à l'effort de coupe et de compression.

– une précision plus fine des mouvements et des dimensions obtenus,

– une amélioration sensible de la qualité du produit déroulé,

– une réduction importante des réactions précitées en leur opposant justement la composante dans leur direction du poids important du chariot porte-outils.

– une réduction considérable de l'usure des organes de la machine,

– un accroissement important de la robustesse et de la fiabilité de cette machine.

Comme les machines à dérouler connues, la machine perfectionnée de l'invention comporte un chariot de coupe et un dispositif antiflambage pressés par des dispositifs d'actionnement contre la bille de bois prise entre les griffes des broches extrêmes d'entraînement en rotation, le chariot de coupe et le dispositif antiflambage étant guidés en translation relativement au bâti fixe de la machine suivant des plans convergents formant entre eux un angle obtus sensiblements égal à 120° et ouvert vers le haut.

Pour atteindre le but précité et conformément à l'invention, le plan bissecteur des plans d'intervention du chariot de coupe et du dispositif antiflambage passant par l'axe de rotation des broches est sensiblement vertical et ces chariots sont appliqués contre des moyens de butée mus en synchronisme par au moins un autre dispositif d'actionnement, pour se rapprocher, avec des pas sensiblement égaux, de l'axe de rotation précité.

Avantageusement, les chariots de coupe et antiflambage sont repoussés par des verins d'actionnement permanent contre lesdits moyens de butée.

Suivant une première forme de réalisation, les moyens de butée sont constitués par deux cames triangulaires qui sont disposées aux deux extrémités respectivement des chariots, qui présentent des côtés symétriques de butée s'étendant perpendiculairement aux plans de guidage de ces chariots le long des glissières fixes et qui sont mobiles en translation sensiblement verticale en relation avec le dispositif d'entraînement précité, de préférence du type vis-mère et écrou, les côtés de butée de ces cames coopérant avec des palpeurs à galets dont les chariots sont munis en regard.

Suivant une deuxième forme de réalisation, les moyens de butée sont constitués par deux vis-mères qui sont disposées à chacune des deux extrémités des chariots, qui s'étendent suivant les directions de guidage de ces chariots le long des glissières fixes, qui sont montées tournantes mais immobilisées en translation relativement au bâti fixe et qui sont reliées cinématiquement, pour leurs rotations synchrones, au dispositif d'actionnement précité, de préférence de type arbre rotatif en engrenage de renvoi d'angle, les vis-mères coopérant avec des écrous de butée mobile solidaires desdits chariots.

Quelle que soit la forme de réalisation choisie, le chariot porte-outils supporte directement un couteau et par l'intermédiaire de glissières de guidage inclinées d'un angle sensiblement égal à 6° par rapport aux glissières de ce chariot porte-couteau en convergeant vers celles-ci en direction de l'axe de rotation précité, en chariot porte-barre de compression, lequel est repoussé par au moins un vérin d'actionnement pour mettre en contact, par l'intermédiaire d'une butée réglable, ce chariot avec un arrêtoir du chariot porte-couteau, ce couple butée-arrêtoir étant situé du côté de l'axe de rotation.

Divers autres caractéristiques et avantages de l'invention ressortent d'ailleurs de la decription détaillée qui suit.

Des formes de réalisation de l'objet de l'invention sont représentées, à titre d'exemples non limitatifs, sur le dessin annexé.

Sur ce dessin:

– la figure 1 est une élévation-coupe transversale montrant une première forme de réalisation des perfectionnements apportés, selon l'invention, à une machine à dérouler le bois,

– la figure 2 est une vue analogue à la figure 1, se rapportant à une deuxième forme de réalisation.

– la figure 3 est un schéma faisant ressortir la correction de profil de la came triangulaire mise en œuvre dans la réalisation de la figure 1.

– la figure 4 est un autre schéma théorique faisant comprendre le montage particulier de la barre de compression.

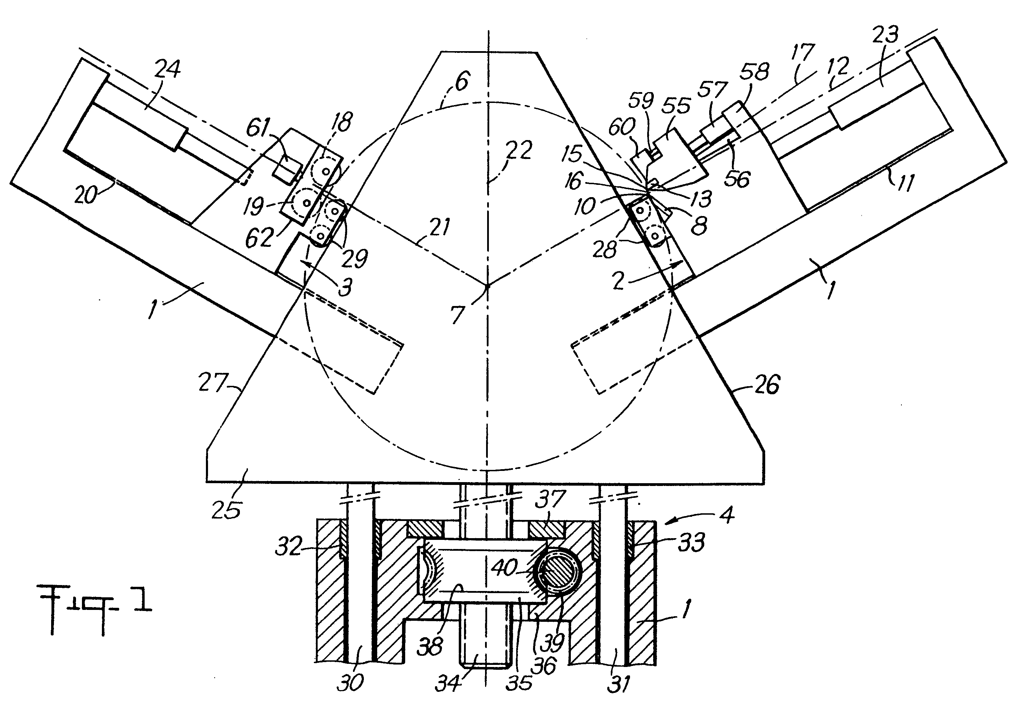

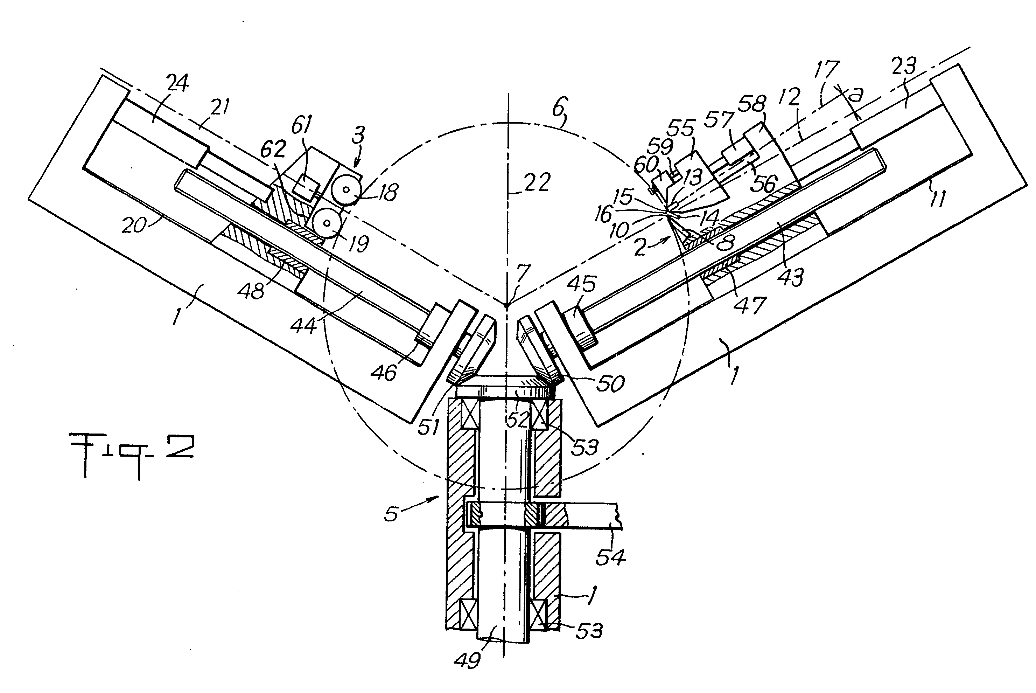

Quelle que soit la forme de réalisation choisie, la machine à dérouler le bois, telle qu'elle est perfectionnée, comporte un bâti fixe 1 dont ne sont schématisées que les parties qui supportent le chariot de coupe 2, le chariot antiflambage 3 et le dispositif 4 ou 5 de commande de l'avance de ces chariots. Pour faciliter la compréhension des perfectionnements, le reste du bâti et des organes nécessaires au bon fonctionnement du déroulage ne sont pas illustrés par le dessin: c'est en particulier le cas pour les broches extrêmes de prise d'une bille de bois 6 et d'entraînement en rotation de celle-ci autour d'un axe 7. Les chariots 2 et 3 s'étendent sur toute la distance libre entre les broches pour pouvoir dérouler les billes de bois de longueur maximale et les deux dispositifs de commande 4 (figure 1) ou 5 (figure 2) sont situés aux extrémités des chariots hors du champ d'intervention des moyens de déroulage.

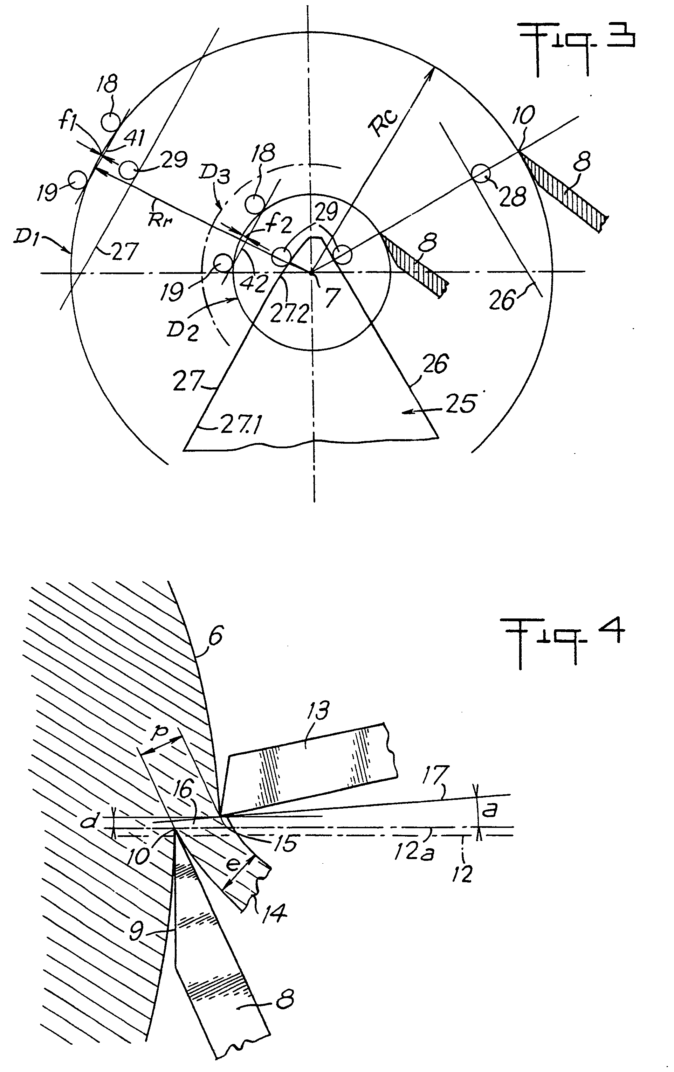

Le chariot de coupe est muni, par tout moyen de réglage et de fixation approprié, d'un couteau de déroulage 8 (figures 1 et 2) dont la surface de talonnage 9 au contact de la bille de bois 6 (figure 4) est tangente à celle-ci à partir de l'arête de coupe 10. Le chariot 2 est guidé le long d'une glissière fixe 11 du bâti et est mû en translation pour que l'arête de coupe 10 se déplace dans un plan 12a surélevé de 2 mm par rapport à celui qui passe par l'axe de rotation 7 et auquel il est parallèle. Cette surélévation permet d'obtenir une variation automatique et continue de l'angle de dépouille de l'ordre de 2° entre les diamètres 800 et 100 mm. Une barre de compression 13 est également montée sur ce chariot 2 pour comprimer le bois selon un taux et dans une zone voisine de l'arête de coupe 10 parfaitement déterminés. Ainsi, le bois déroulé, tel que du placage 14, présente une épaisseur «e», alors que l'arête de compression 15 de la barre 13 délimite avec l'arête de coupe 10 un passage dont l'épaisseur «p» est comprise entre 80 et 85% de l'épaisseur «e» du placage et que cette arête de compression 15 doit être située à un niveau supérieur à celui de ladite arête de coupe suivant une distance «d» qui est perpendiculaire au plan 12a et dépend de l'épaisseur «e». L'expérience a montré que si cette épaisseur «e» est de 1, 2, 3, 4, 5, 6 mm, la distance «d» doit être de $^5/_{10}$, $^6/_{10}$, $^7/_{10}$, $^8/_{10}$, $^9/_{10}$, $^{10}/_{10}$ . . . respectivement. Par conséquent, il suffit, pour appliquer cette règle expérimentale, que l'arête de compression 15 soit déplacée, lors du réglage de l'épaisseur, dans un plan 17 faisant un angle «a» (figure 4) par rapport au plan 12 précité, angle qui est sensiblement égal à 6°.

Le chariot antiflambage 3 porte deux rangées équidistantes de rouleaux presseurs 18 et 19 maintenus au contact de la bille de bois 6. Ce chariot est guidé le long d'une glissière fixe 20 du bâti et est mû en translation pour que les lignes de contact de ces rouleaux se déplacent parallèlement à un plan de symétrie 21 passant par l'axe de rotation 7.

Le plan 12 engendré par l'arête de coupe 10 lors de son déplacement est parallèle au plan de guidage du chariot 2 le long de la glissière 11. De même, le plan de symétrie 21 des rouleaux 18, 19 lors de leur déplacement est parallèle au plan de guidage du chariot 3 le long de la glissière 20. Ces deux plans 12 et 21 se coupent suivant l'axe de rotation 7 et forment un dièdre ouvert de 120° environ vers le haut.

Suivant l'invention, le plan bissecteur 22 de ce dièdre est sensiblement vertical, de sorte que les glissières 11 et 20 sont en pente descendante vers la bille de bois et que les chariots 2 et 3 appliquent, par leur propre poids qui est relativement important, le couteau 8 et la barre de compression 13, respectivement les rouleaux presseurs antiflambage 18, 19 contre la bille de bois 6.

Ces chariots 2 et 3 sont repoussés vers ladite bille de bois 6 par des vérins d'actionnement permanent 23 et 24 (figures 1 et 2) qui peuvent être hydrauliques ou pneumatiques; ces vérins sont destinés à faire coopérer lesdits chariots 2 et 3 avec des moyens de butée mûs en synchronisme et constituant les dispositifs d'avance 4 ou 5 précités.

Suivant la première forme de réalisation illustrée par la figure 1, le dispositif d'avance 4 est constitué, à chacune des extrémités des chariots 2 et 3, par une came triangulaire 25 dont les côtés pentus 26, 27 s'étendent perpendiculairement aux plans de guidage de ces chariots, donc aux plans 12 et 21 de déplacement des outils de coupe 8, 13 et des rouleaux antiflambage 18, 19; par conséquent, ces côtés de butée 26 et 27 sont symétriques par rapport au plan vertical 22 passant par l'axe de rotation 7 et forment entre eux un angle de 60° dans l'exemple choisi.

Les côtés de butée 26 et 27 coopèrent avec des palpeurs à galets 28 et 29 respectivement, portés par les chariots 2 et 3 en regard des vérins 23 et 24.

Chacune de ces cames 25 est mue en translation verticale (plus précisément de façon parallèle au plan 22), pour que ses côtés de butée 26 et 27 déterminent, en retenant plus ou moins loin de l'axe de rotation 7 les palpeurs 28 et 29, le rayon d'intervention du couteau 8, ainsi que de la barre de compression 13 du chariot 2 et, respectivement celui des rouleaux presseurs 18 et 19 du chariot 3. A cet égard, il est important de remarquer que cette came détermine avec une extrême précision la spirale de déroulage, étant donné que la position géométrique des chariots 2 et 3 est définie avec rigueur sans que les aléas inhérents au bois ne puissent intervenir. En effet, la somme de la force des vérins 23, 24 et de la composante dans leur direction du poids des chariots 2 et 3 est supérieure à la réaction maximale du bois sur ceux-ci vers l'arrière, de sorte que les palpeurs 28, 29 restent, quels que soient les aléas précités, appliqués contre chaque came extrême 25 et que lesdits chariots ne peuvent reculer ou avancer que sous le contrôle impératif et permanent des cames.

Chaque came 25 est guidée en translation verticale relativement au bâti fixe 1; elle peut alors être solidaire de deux colonnes 30, 31 montées coulissantes dans des manchons 32, 33; chaque came 25 est en outre solidaire d'une vis-mère verticale 34 coopérant avec un écrou d'actionnement 35, lequel est monté tournant et immobilisé en translation axiale dans le bâti 1, grâce à une collerette 36 et une couronne rapportée 37, par exemple. Les deux écrous 35 des deux cames extrêmes 25 sont commandés en rotation synchrone par tous moyens appropriés, la montée ou la descente desdites cames ayant rigoureusement la même valeur instantanée; dans l'exemple représenté, les écrous 35 présentent une denture périphérique 38 coopérant avec une vis tangentes 39, les vis tangentes 39 des deux écrous extrêmes 35 étant accouplées à un arbre commun 40 qui est relié à un moyen d'entraînement en rotation tel qu'un groupe moto-réducteur.

Par ailleurs, étant donné que les deux rouleaux presseurs 18 et 19 du chariot antiflambage sont écartés l'un de l'autre, il se produit une anomalie, exposée ci-après, qu'il est utile de corriger pour les faibles diamètres de la bille de bois 6. En effet, le croquis de la figure 3 montre que la flèche f1 de la corde 41 tangente aux rouleaux 18 et 19 appliquée contre une bille de grand diamètre D1 est plus faible que la flèche f2 de la corde 42 tangente aux rouleaux 18 et 19 appliqués contre une bille de petit diamètre D2. Lorsque le diamètre de la bille est supérieur à un diamètre limite D3, la flèche précitée varie très peu, de sorte que le palpeur à galets 29 associé au chariot 3 et considéré comme étant sensiblement ponctuel peut s'appuyer sur une partie rectiligne 27.1 du côté de butée 27 de la came 25 correspondante pour que les rouleaux presseurs 18 et 19 de ce chariot 3 soient toujours appliqués contre la bille de bois 6 lorsque le couteau 8 déroule ladite bille de son diamètre maximal jusqu'au diamètre limite D3. Par contre, lorsque le diamètre de la bille est inférieur au diamètre limite D.3, la flèche précitée varie suffisamment pour que les rouleaux presseurs 18 et 19 s'écartent imperceptiblement de la bille de bois lors de son déroulage par le couteau 8 du diamètre D.3 jusqu'au diamètre minimal; afin que le contact soit maintenu entre lesdits rouleaux 18 et 19 et la bille alors que le mouvement du chariot 3 portant ces rouleaux est contrôlé par les cames extrêmes 25, le côté de butée 27 desdites cames est incurvé convexe dans sa partie 27.2 proche du sommet; cette partie incurvée est correctrice et compense la variation de la flèche par une avance très valablement croissante de façon progressive du palpeur 29 précité.

Suivant la deuxième forme de réalisation illustrée par la figure 2, le dispositif d'avance 5 est constitué, à chacune des extrémités des chariots 2 et 3, par des vis-mères 43 et 44 s'étendant parallèlement aux glissières fixes 11 et 20 respectivement des chariots 2 et 3. Ces vis-mères sont montées tournantes et immobilisées en translation dans des butées extrêmes 45 et 46 conjuguées à des paliers du bâti 1. Elles coopèrent avec des écrous 47 et 48 solidaires des chariots précités 2 et 3.

Les vis-mères constituent véritablement des butées, car les vérins 23 et 24 appliquent, par l'intermédiaire des chariots 2 et 3, les taraudages des écrous 47 et 48 contre les filetages des vis 43 et 44; en outre, ces vis sont des butées mobiles provoquant une translation symétrique synchrone des chariots 2 et 3; en effet, elles sont accouplées à un arbre d'entraînement commun 49, au moyen de pignons coniques 50 et 51 dont elles sont solidaires et qui engrènent avec un pignon d'entraînement 52 solidaire de l'arbre 49. Un groupe d'entraînement en rotation commun, tel qu'un groupe moto-réducteur, est relié, par des transmissions cinématiques 54, aux deux arbres 49 qui animent en synchronisme les deux paires extrêmes de vis-mères 43 et 44.

Cette deuxième forme de réalisation du dispositif d'avance 5 intervient, lors de son fonctionnement, de la même manière que la première sur le déroulage du bois.

Quelle que soit la forme de réalisation retenue, il faut, comme cela est déjà indiqué dans ce qui précède, que la barre de compression 13 du chariot 2 puisse être réglée, en fonction de l'épaisseur «e» du placage déroulé 14, en position sur le plan incliné 17, afin de déterminer avec précision l'épaisseur «p» du passage 16 et la distance «d» en projection verticale de l'arête de compression 15 relativement à l'arête de coupe 10.

Pour effectuer ce réglage, des moyens particuliers et spécifiques de l'invention sont mis en œuvre. La barre de compression 13 est portée par un chariot 55 guidé en translation le long d'une glissière 56 solidaire du chariot porte-couteau 2, cette glissière 56 étant inclinée par rapport à la glissière 11 d'un angle de 60° environ qui est celui que forment entre eux les plans de guidage considérés 12 et 17. Le chariot porte-barre 55 est repoussé par un vérin 57 prenant appui sur une partie saillante 58 du chariot 2 contre une butée 59. Celle-ci est située du côté du chariot 55 faisant face à la bille 6 et est réglable par rapport à une autre partie saillante ou arrêtoir 60 du chariot porte-lame 2. Ainsi, le réglage de la butée 59 permet de déterminer l'épaisseur «p» du passage 16 et le ou les vérins 57 sont suffisamment puissants pour que la barre de compression 13 suive rigoureusement et avec précision sa trajectoire, quelle que soit la résistance opposée par le bois.

Par ailleurs, il est bien évident que la différence entre le rayon Rc de la bille de bois aboutissant sur l'arête de coupe du couteau 8 et le rayon Rr de cette bille aboutissant sur les lignes de contact des rouleaux presseurs 18 et 19, dépend de l'épaisseur «e» du bois déroulé. Etant donné que cette épaisseur est essentiellement variable, mais que le bord de butée 27 des cames 25 n'est pas réglable relativement à celles-ci, il est souhaitable de prévoir entre le chariot 3 et les rouleaux presseurs 18 et 19 un moyen de réglage. Par exemple, ce moyen de réglage peut être constitué par des cales d'épaisseur, un servo-moteur 61 ou autre, interposé entre le chariot 2 et un support 62 sur lequel sont montées les deux rangées de rouleaux 18 et 19; le support 62 est alors guidé sur une faible course relativement au chariot 3 et est muni de moyens très résistants de fixation ou de bridage.

Quelle que soit la forme de réalisation choisie, il est important de noter l'intervention essentielle de la gravité dans l'équilibrage statique et dynamique de la dérouleuse.

En particulier, la gravité est associée aux déplacements convergents des chariots 2 et 3 le long des glissières 11 et 20 inclinées de façon sensiblement symétrique sur le bâti fixe 1.

Les chariots équipés 2 et 3 appuient donc sur la bille 6 et cumulent leurs effets sous la forme de deux forces sensiblement égales et convergentes dont la somme résultante s'ajoute à la gravité.

La résultante et la masse de l'ensemble tournant (bille à dérouler et broches de la dérouleuse) s'ajoutent pour caler le tout vers le bas, interdisant tout jeu et par conséquent tout déplacement de l'axe de rotation 7.

## Revendications

1. Machine à dérouler le bois comportant un chariot de coupe (2) et un dispositif antiflambage (3) pressés par des dispositifs d'actionnement contre la bille de bois (6) prise entre les griffes des broches extrêmes d'entraînement en rotation, le chariot de coupe et le dispositif antiflambage étant guidés en translation (11, 20) relativement au bâti fixe (1) de la machine suivant des plans convergents formant entre eux un angle obtus sensiblement égal à 120° et ouvert vers le haut, la machine étant caractérisée en ce que le plan bissecteur (22) des plans d'intervention (12 et 21) du chariot de coupe (2) et du dispositif antiflambage (3) passant par l'axe de rotation (7) des broches est sensiblement vertical et en ce que ces chariots (2 et 3) sont appliqués contre des moyens de butée (25, 43, 44) mus en synchronisme par au moins un autre dispositif d'actionnement (34 à 40; 49 à 54) pour se rapprocher avec des pas sensiblement égaux, de l'axe de rotation (7) précité.

2. Machine selon la revendication 1, caractérisée en ce que les chariots de coupe (2) et antiflambage (3) sont repoussés par des vérins d'actionnement permanent (23, 24) contre lesdits moyens de butée (25; 43, 44).

3. Machine selon la revendication 2, caractérisée en ce que les moyens de butée sont constitués par deux cames triangulaires (25) qui sont disposées aux deux extrémités respectivement des chariots (2 et 3), qui présentent des côtés symétriques de butée (26, 27) s'étendant perpendiculairement aux plans de guidage de ces chariots le long des glissières fixes (11, 20) et qui sont mobiles en translation sensiblement verticale en relation avec le dispositif d'actionnement (34 à 40) précité, de préférence du type vis-mère (34), et écrou (35), les côtés de butée (26, 27) de ces cames (25) coopérant avec des palpeurs à galets (28, 29) dont les chariots (2, 3) sont munis en regard.

4. Machine selon la revendication 2, caractérisée en ce que les moyens de butée sont constitués par deux vis-mères (43, 44) qui sont disposées à chacune des deux extrémités des chariots (2, 3), qui s'étendent suivant les directions de guidage de ces chariots le long des glissières fixes (11, 20), qui sont montées tournantes, mais immobilisées en translation (en 45, 46) relativement au bâti fixe (1) et qui sont reliées cinématiquement pour leurs rotations synchrones, au dispositif d'actionnement (49 à 54) précité, de préférence du type arbre rotatif (49) et engrenage de renvoi d'angle (50 à 52), les vis-mères (43, 44) coopérant avec des écrous (47, 48) de butée mobile solidaires desdits chariots (2, 3).

5. Machine selon la revendication 2, caractérisée en ce que le chariot de coupe (2) supporte directement un couteau (8) et, par l'intermédiaire de glissières de guidage (56) inclinées d'un angle sensiblement égal à 6° par rapport aux glissières (11) de ce chariot porte-couteau (2) convergeant vers celles-ci en direction de l'axe de rotation (7) précité, un chariot porte-barre de compression (55), lequel est repoussé par au moins un vérin d'actionnement (57) pour mettre en contact, par l'intermédiaire d'une butée réglable (59), ce chariot (55) avec un arrêtoir (60) du chariot porte-couteau (2), ce couple butée-arrêtoir étant situé du côté de l'axe de rotation (7).

6. Machine selon la revendication 2, caractérisée en ce que le chariot antiflambage (3) porte deux rangées équidistantes de rouleux presseurs (18, 19) par l'intermédiaire d'un moyen de réglage, tel que des cales d'épaisseur, un servo-moteur (61) ou autres, permettant d'adapter à l'épaisseur (e) du bois déroulé, la différence entre les rayons (Rc et Rr) de la bille (6) aboutissant respectivement sur l'arête (10) du couteau (8) et sur les lignes de contact de ces rouleaux (18, 19).

7. Machine selon la revendication 3, caractérisée en ce que le chariot antiflambage (3) porte deux rangées de rouleaux presseurs (18, 19) et, à chaque extrémité, un palpeur (de préférence à deux galets) (29) appliqué contre le côté de butée conjugué (27) de la came extrême (25) correspondante, lequel côté est rectiligne (en 27.1) jusqu'à un diamètre limite (D3) de la bille de bois (6) et incurvé (en 27.2) vers l'axe de rotation (7) en deçà de ce diamètre pour compenser la variation, en fonction dudit diamètre, de la flèche (f1, f2) de la corde (41, 42) tangente aux deux rouleaux.

**Claims**

1. A improved veneer lathe comprising a cutting slide (2) and an anti-buckling device (3) pressed by actuating means against a workpiece (6) secured between jaws of rotating end chunks, said cutting slide and said anti-buckling device being guided in a crosswise motion (11, 20) relative to the lathe's stationary frame (1) along convergent planes forming between them an upwardly-opening obtuse angle of substantially 120°, characterized in that said working planes (12 and 21) of the cutting slide (2) and the anti-buckling device (3) are bisected by a plane (22) substantially vertical to and intersecting the rotational axis (7) of said workpiece and in that said slides (2 and 3) are applied against stop means (25, 43, 44) synchronously driven by at least another actuating means (34 to 40; 49 to 54), such that the slides move in substantially equal steps towards the above mentioned rotational axis (7).

2. A veneer lathe according to claim 1, characterized in that the cutting slide (2) and the anti-buckling device (3) are pushed by permanently acting jacks (23, 24) toward said stop means (25; 43, 44).

3. A veneer lathe according to claim 2, characterized in that said stop means includes two triangular cams (25) arranged at both ends of the said respective slides (2 and 3), said cams having symmetrical arresting sides (26, 27) extending perpendicularly to the guidance planes of said slides along the fixed guideways (11, 20), said arresting sides being movable in a substantially (34 to 40) vertical direction in relation with said actuating means, preferably of the lead screw (34) and nut (35) type, and said arresting sides of the cam (25) cooperating with cam follower rollers (28, 29) on the facing slides (2, 3).

4. A veneer lathe according to claim 2, characterized in that stop means includes two lead screws (43, 44) mounted at both ends of said slides (23) and extending in the direction of guiding said slides along their fixed slideways (11, 20), said stops being mounted rotatably but fixedly in translation (in 45, 46) relative to the stationary frame (1) and kinematically linked, for synchronous rotation, to said actuating device (49 to 54), preferably of the drive shaft (49) with bevel gears (50 to 52) type, said lead screws (43, 44) cooperating with movable stop nuts (47, 48) attached to said slides (2, 3).

5. A veneer lathe according to claim 2, characterized in that the cutting slide (2) directly supports a knife (8) and indirectly supports a compression bar holding slide (55), the latter being supported via slideways (56) inclined at an angle of substantially 6° with respect to the slideways (11) of said knife slide (2) and converging toward said latter slideways in the direction of said rotational axis (7), said compression bar slide being pushed by at least one actuating jack (57) into contact, via an adjustable stop (59), with an arresting means (60) on the knife holding slide (2), said stop and arresting means pair being located on the rotational axis side (7).

6. A veneer lathe according to claim 2, characterized in that the anit-buckling device (3) supports two equally spaced rows of pressing rollers (18, 19) via an intervening adjusting means such as shims, a servomotor (61) or another device, enabling the difference between two radiuses (Rc and Rr) of the workpiece (6), respectively terminating at the cutting edge (10) of the knife (8) and at the contact lines of said pressing rollers (18, 19), to be adjusted to suit the thickness (e) of the veneer peeled from the workpiece.

7. A veneer lathe according to claim 3, characterized in that the anti-buckling device (3) is fitted with two rows of pressing rollers (18, 19) and with a sensor (preferably with two rollers) (29) applied to the conjugate edge of the arresting side of the corresponding end cam (25), said latter edge being straight up in (27.1) to a point corresponding with a limit diameter (D3) of said workpiece (6) and curved (in 27.2) inwardly toward the rotational axis (7) of the lathe beyond a point corresponding with a lesser diameter than said limit diameter, so as to compensate for the variation in the length of the sagitta (f1, f2) of the chord (41, 42) tangent to the two rollers.

**Patentansprüche**

1. Maschine zum Schälen von Holz mit einem Schneidewagen (2) und einer Vorrichtung (3), die durch Betätigungsvorrichtungen gegen den Holzstamm (6) gedrückt werden, der zwischen den Greifern der Endspindeln zum Antrieb der Drehbewegung gehalten ist, wobei der Schneidewagen und die Vorrichtung zur Verhinderung des Durchbiegens des Holzstammes in Bezug auf den festen Aufbau (1) der Maschine zur Translation (11, 20) entlang zusammenlaufenden Ebenen geführt werden, die einen stumpfen Winkel von im wesentlichen 120° einschliessen, der nach oben geöffnet ist, dadurch gekennzeichnet, dass die winkelhalbierende Ebene (22) zwischen den Arbeitsebenen (12 und 21) des Schneidewagens (2) und der Vorrichtung (3) zur Verhinderung des Durchbiegens des Holzstammes, die durch die Rotationsachse (7) der Spindel läuft, im wesentlichen vertikal ist und dass diese Wägen (2 und 3) zum Anliegen gegen Anschlagvorrichtungen (25, 43, 44) gebracht werden, die synchron durch mindestens eine andere Betätigungsvorrichtung (34–40; 49–54) bewegt werden, um sich mit im wesentlichen gleichen Schritten der vorher genannten Rotationsachse (7) zu nähern.

2. Maschine nach Anspruch 1, dadurch gekennzeichnet, dass der Schneidewagen (2) und der Wagen (3) zur Verhinderung des Durchbiegens des Holzstammes durch ständig wirkende Kolben-Zylindereinheiten (23, 24) gegen die Anschlagvorrichtung (25; 43, 44) gedrückt werden.

3. Maschine nach Anspruch 2, dadurch gekennzeichnet, dass die Anschlagvorrichtungen durch zwei dreieckige Nocken (25) gebildet werden, die an den beiden Enden der Wägen (2 und 3) jeweils angeordnet sind und die symmetrische Anschlagseiten (26, 27) aufweisen, die sich senkrecht zu den Führungsebenen der Wägen entlang fester Gleitschienen (11, 20) erstrecken un die zur im wesentlichen vertikaler Translation in Verbindung mit der vorher genannten Betätigungsvorrichtung (34–40) beweglich sind, die vorzugsweise von der Art Leitspindel (34) und Muttern (35) ist, wobei die Anschlagseiten (26, 27) dieser Nocken (25) mit Führungsrollen (28, 29) zusammenwirken, mit denen die Wägen (2, 3) an den sich gegenüberliegenden Seiten ausgestattet sind.

4. Maschine nach Anspruch 2, dadurch gekennzeichnet, dass die Anschlagvorrichtungen durch zwei Leitspindeln (43, 44) gebildet werden, die an jedem der beiden Enden der Wägen (2, 3) angeordnet sind, sich entlang den Führungsrichtungen der Wägen und der festen Gleitschienen (11, 20) erstrecken, drehbar, aber gegenüber Translationsbewegungen (45, 46) bezüglich dem festen Aufbau (1) unbeweglich gelagert sind und die für ihre synchronen Rotationen mit der Betätigungsvorrichtung (49–54) kinematisch verbunden sind, die vorzugsweise von der Art Drehwelle (49) und Winkelgetriege (50–52) ist, wobei die Leitspindeln (43, 44) mit beweglichen Anschlagmuttern (47, 48) zusammenwirken, die mit den Wägen (2, 3) fest verbunden sind.

5. Maschine nach Anspruch 2, dadurch gekennzeichnet, dass der Schneidewagen (2) unmittelbar ein Messer (8) und, über Führungsschienen (56), die mit einem Winkel von ungefähr gleich 6° zu den Gleitschienen (11) des Messer tragenden Wagens (2) und mit diesen in Richtung der Rotationsachse (7) zusammenlaufend geneigt ist, einen Druckstab tragenden Wagen (55) trägt, der durch mindestens eine Betätigungskolben-Zylinderheinheit (57) gedrückt wird, um über einen einstellbaren Anschlag (59) diesen Wagen (55) mit einem Ansatz (60) des Messer tragenden Wagens (2) zur Berührung zu bringen, wobei dieses Paar Anschlag-Ansatz neben der Rotationsachse (7) gelegen ist.

6. Maschine nach Anspruch 2, dadurch gekennzeichnet, dass der Wagen (3) zur Verhinderung des Durchbiegens des Holzstammes zwei gleich beabstandete Reihen von Druckwalzen (18, 19) über eine Einstellvorrichtung trägt, wie dicke Keile, einen Servomotor (61) oder andere, die es erlauben, die Stärke (e) des abgeschälten Holzes der Differenz zwischen den Radien (Rc und Rr) des Stamms (6) anzupassen, die bis zur Kante (10) des Messers (8) bzw. bis zu den Berührungslinien der Walzen (18, 19) reichen.

7. Maschine nach Anspruch 3, dadurch gekennzeichnet, dass der Wagen (3) zur Verhinderung des Durchbiegens des Holzstammes zwei Reihen von Druckwalzen (18, 19) und, an jedem Ende einen Fühler (29), vorzugsweise mit zwei Laufrollen trägt, der gegen die dazugehörige Anschlagseite (27) der entsprechenden Endnocke (25) anliegt, wobei diese Seite (in 27.1) bis zu einem Grenzdurchmesser (D3) des Holzstamms (6) geradlinig und ab diesem Durchmesser zur Rotationsachse (7) gekrümmt (in 27.2) ist, um abhängig von diesem Durchmesser die Änderung der Durchbiegung (f1, f2) der auf beiden Rollen tangentialen Sehne (41, 42) zu kompensieren.

Fig 1

Fig. 2

0 126 677

Fig. 3

Fig. 4